# EUROPEAN PATENT SPECIFICATION

(11) **EP 4 336 626 B1**
(45) Date of publication and mention of the grant of the patent: **08.07.2026**
(21) Application number: 23807903.2
(22) Date of filing: 17.05.2023
(51) Int. Cl.: H01M 10/6569, H01M 50/103, H01M 10/6553, H01M 50/273, H01M 10/647, H01M 50/202, H01M 50/375, H01M 50/30, H01M 50/24, H01M 10/613, H01M 50/224, H01M 50/211, H01M 10/6567, H01M 10/6556

(54) **PRISMATIC SECONDARY BATTERY**
PRISMATISCHE SEKUNDÄRBATTERIE
BATTERIE SECONDAIRE PRISMATIQUE

(30) Priority: 20.05.2022 KR 20220061752
(43) Date of publication of application: 13.03.2024
(73) Proprietor: LG Energy Solution, Ltd., Seoul 07335 (KR)
(72) Inventor: LEE, Yong Ho, Daejeon 34122 (KR); LEE, Jin Kyu, Daejeon 34122 (KR)
(74) Representative: Plasseraud IP
(86) International application number: PCT/KR2023/006678
(87) International publication number: WO 2023/224384

(56) References cited:
- EP-A1- 3 493 295
- EP-A1- 3 493 295
- WO-A1-2020/049249
- WO-A1-2021/008875
- WO-A1-2022/082395
- JP-A- 2015 135 749
- KR-A- 20150 031 611
- KR-A- 20180 006 150
- KR-A- 20180 017 695
- US-A1- 2019 137 037
- US-A1- 2019 280 259
- US-B2- 10 629 869

## Description

### [Technical Field]

The present invention relates to a prismatic secondary battery capable of suppressing a thermal propagation phenomenon in which other surrounding secondary batteries continuously overheat when thermal runaway occurs.

This application claims the benefit of priority based on Korean Patent Application No. 10-2022-0061752, filed on May 20, 2022.

### [Background Art]

Secondary batteries are rechargeable unlike primary batteries and are being researched and developed a lot due to their compact size and high capacity potential. The demand for secondary batteries as energy sources is increasing more rapidly due to technology development and an increase in demand for mobile devices and also due to electric vehicles and energy storage systems that are emerging in line with the needs of the times for environmental protection.

Secondary batteries are classified into coin type batteries, cylindrical type batteries, prismatic type batteries, and pouch type batteries according to the shape of a battery case. In such a secondary battery, an electrode assembly mounted in a battery case is a chargeable or dischargeable power generating device having a structure in which an electrode and a separator are stacked.

Since continuous use of the secondary battery for a long period is required, heat generated during a process of charging and discharging needs to be effectively controlled. When cooling of the secondary battery is not smoothly performed, since a rise in temperature causes an increase in current, and a chain reaction of positive feedback occurs in which the increase in current causes the temperature to rise again, ultimately, the secondary battery leads to a catastrophic state of thermal runaway.

Further, when secondary batteries are grouped in the form of a module or pack, a thermal propagation phenomenon in which other surrounding secondary batteries continuously overheat due to the thermal runaway occurring in any one secondary battery occurs. Furthermore, since the risk of fire is high due to an ignition source such as combustible gas emitted from the overheated secondary batteries, a heating electrode, and the like, the risk of ignition needs to be suppressed.

### [Related Art Document]

(Patent Document 1) Korean Registration Patent No. 10-1270796 (published June 5, 2013)

WO 2021/008875 A1 discusses a cooling system and an energy storage device with the cooling system. WO 2020/049249 A concerns a battery pack featuring an optimized thermal management system in which a temperature-controlled fluid comes into direct contact with the battery cells. WO 2022/082395 A1 discusses a battery to timely control the thermally runaway battery cells and reduce the occurrence of safety accidents. US 2019/137037 A1 discusses a container having a thermal barrier member for reducing the transfer of heat from and/or to the container. US 2019/280259 A1 relates to a rechargeable battery transportation device for a rechargeable battery. EP 3 493 295 A1 relates to a battery for managing thermal runaway. And, JP2015-135749 A discloses a system for preventing smoke generation and fire caused by gas emitted from a lithium ion battery.

### [Disclosure]

### [Technical Problem]

The present invention is directed to providing a secondary battery capable of effectively suppressing and preventing a thermal propagation phenomenon due to thermal runaway occurring in the secondary battery.

However, the technical problems to be solved by the present invention are not limited to the above-mentioned problems, and other problems which are not mentioned will be clearly understood by those skilled in the art from descriptions of the invention disclosed below.

### [Technical Solution]

The present invention relates to a prismatic secondary battery, and in one example, includes a case made of metal, at least one battery cell accommodated in the case, a cooling unit disposed at at least one side of the case, and a fixing body configured to fix the cooling unit, and formed with a vent hole configured to guide gas generated in the at least one battery cell and passing through the cooling unit to an outside of the case.

The cooling unit includes an absorbent material impregnated with a liquid vaporized by heat, and a thermally conductive body formed with an insertion hole into which the absorbent material is inserted.

In addition, the cooling unit includes a cover bonded to the front and back of the thermally conductive body with respect to a flow direction of the gas. The cover is a membrane member for preventing the liquid impregnated in the absorbent material from being lost due to natural evaporation. And, the cover is configured to be melted by the heat of the gas.

In one embodiment of the present invention, the absorbent material may be a super absorbent matrix, and the super absorbent matrix may include a super absorbent polymer (SAP) or super absorbent fiber (SAF).

Further, the liquid impregnated in the absorbent material may be water.

In one embodiment of the present invention, the at least one battery cell may be a pouch-type battery cell having an electrode lead, and the electrode lead may protrude toward the cooling unit.

Further, the prismatic secondary battery of the present invention may include a side case coupled to one side end portion of the case, and configured to cover the fixing body, and a busbar provided between the fixing body and the side case and electrically connected to the electrode lead.

A busbar hole configured to communicate with the vent hole and open toward the outside of the side case may be formed in the busbar.

Meanwhile, according to another embodiment of the present invention, the cooling unit may include a filter disposed at at least one of the front and a back of the thermally conductive body with respect to a flow direction of the gas and moves to the vent hole, and configured to filter particles exceeding a certain size included in the gas

Further, an end filter configured to filter particles exceeding a certain size included in the gas passing through the cooling unit may be provided in the vent hole of the fixing body.

In addition, the end filter may be broken or separated from the vent hole when a pressure exceeding a certain value is applied.

### [Advantageous Effects]

According to the above-described prismatic secondary battery of the present invention, high-temperature gas and particles generated by a thermal runaway phenomenon are discharged to the outside through a cooling unit containing a built-in cooling liquid. Accordingly, in the prismatic secondary battery of the present invention, as a high-temperature ignition source emitted from overheated battery cells is discharged after being cooled in a case, the risk of a thermal propagation phenomenon occurring is significantly reduced.

Further, in the prismatic secondary battery of the present invention, as filters which filter particles exceeding a certain size are installed in a cooling unit and a vent hole, the risk of an external fire caused by an ignition source such as high-temperature particles can be effectively suppressed.

However, the technical effects to be solved by the present invention are not limited to the above-mentioned effects, and other effects which are not mentioned will be clearly understood by those skilled in the art from descriptions of the invention disclosed below.

### [Brief Description of the Drawings]

Since the accompanying drawings in the present specification exemplify preferable embodiments of the present invention, and serve to make the technical spirit of the present invention be further understood together with the detailed descriptions of the present invention, the present invention should not be understood as being limited to only items described in the drawings.
FIG. 1 is a perspective view of a prismatic secondary battery according to one embodiment of the present invention.
FIG. 2 is an exploded perspective view of the prismatic secondary battery in FIG. 1.

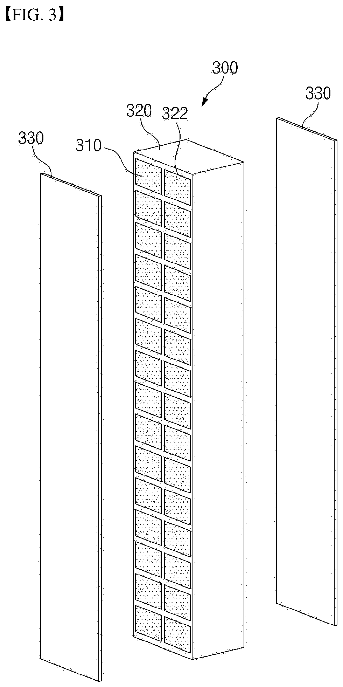

FIG. 3 is a view illustrating a cooling unit included in the prismatic secondary battery in FIG. 1.

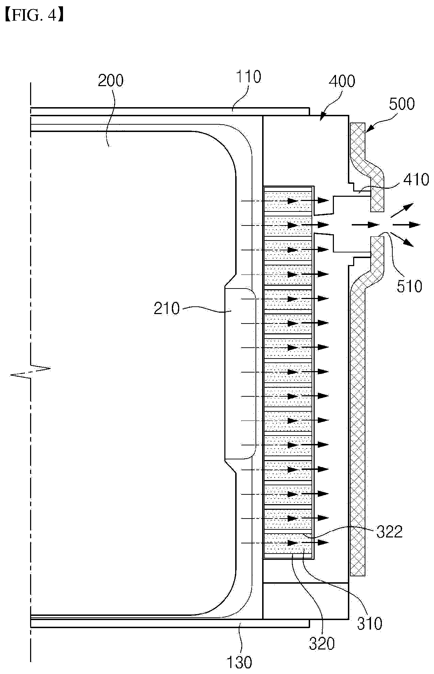

FIG. 4 is a view illustrating a cooling action of the cooling unit in a thermal runaway state.
FIG. 5 is a view illustrating a cooling unit according to another embodiment of the present invention.
FIG. 6 is a view illustrating a state in which an end filter is provided in a vent hole in another embodiment of the present invention.
FIG. 7 is a side perspective view illustrating the cooling unit and the vent hole including the end filter.
FIG. 8 is a view illustrating a structure in which the end filter may be separated by excessive internal pressure.

### [Best mode]

Since the present invention may be variously changed and may have various forms, specific embodiments will be described below in detail.

However, it should be understood that there is no intention to limit the present invention to particular embodiments, and on the contrary, the present invention is to cover all modifications, equivalents, and alternatives falling within the scope of the present invention, as defined by the appended claims.

In the present invention, it should be understood that terms such as "include" and "have" are intended to indicate the presence of a feature, number, step, operation, component, part, or a combination thereof described in the specification, but do not preclude the possibility of the presence or addition of one or more other features, numbers, steps, operations, components, or combinations thereof

Further, when a portion such as a layer, a film, a region, a plate, or the like is referred to as being "on" another portion, this includes not only a case in which the portion is "directly on" the other portion but also a case in which there is a still another portion therebetween. On the other hand, when a portion such as a layer, a film, a region, a plate, or the like is referred to as being "under" another portion, this includes not only a case in which the portion is "directly under" the other portion but also a case in which there is still another portion therebetween. Further, being disposed "on" in the present application may mean that something is disposed at the bottom or top.

The present invention relates to a prismatic secondary battery, and in one example, the prismatic secondary battery of the present invention includes a metal case, at least one or more battery cells accommodated in the case, a cooling unit disposed at at least one side of the case, and a fixing body configured to fix the cooling unit, and formed with a vent hole configured to guide gas generated in the battery cells and passing through the cooling unit to the outside of the case.

Here, the cooling unit includes an absorbent material impregnated with a liquid vaporized by heat generated in the battery cells, and a thermally conductive body formed with an insertion hole into which the absorbent material is inserted.

In the prismatic secondary battery of the present invention, high-temperature gas and particles generated by a thermal runaway phenomenon are discharged to the outside through a cooling unit with a built-in cooling liquid, and accordingly, as a high-temperature ignition source emitted from overheated battery cells is discharged after being cooled in the cooling unit equipped in the case, the risk of a thermal propagation phenomenon occurring is significantly reduced.

### [Mode for Invention]

Hereinafter, specific embodiments of the present invention will be described in detail with reference to the accompanying drawings. Here, front and rear directions or up, down, left, and right directions for designating relative positions used in the following description are intended to help the understanding of the present invention and are based on directions shown in the drawings unless otherwise specified.

### (First embodiment)

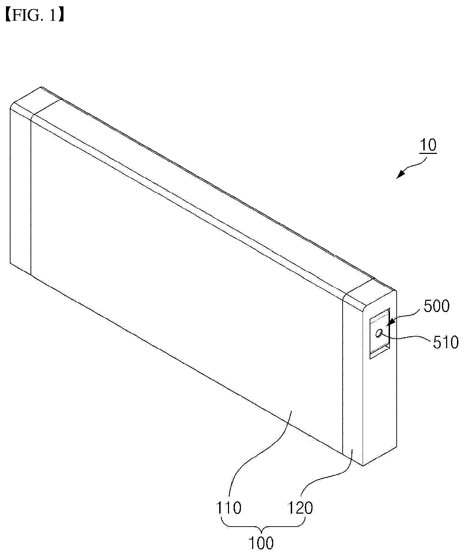

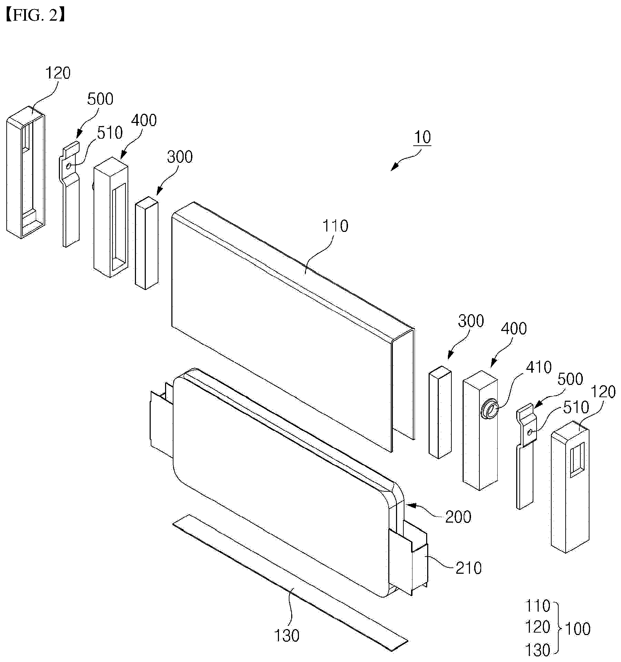

FIG. 1 is a perspective view of a prismatic secondary battery 10 according to one embodiment of the present invention, FIG. 2 is an exploded perspective view of the prismatic secondary battery 10 in FIG. 1.

As shown in the accompanying drawings, the prismatic secondary battery 10 of the present invention includes a metal case and at least one battery cell 200 accommodated in the case. For example, the battery cell 200 in the illustrated embodiment is a pouch-type battery cell 200 with a bidirectional terminal in which electrode leads 210 respectively protrude on both sides in a width direction, and two pouch-type battery cells 200 are stored in the case.

The case may be manufacturing by extruding and molding a metal material such as aluminum, stainless steel, an alloy including the same, or the like. In the illustrated embodiment, in consideration of easy storage of the battery cells 200, costs of extrusion molding, and the like, the case is formed of a main case 110 having a cross section shaped like the lowercase English alphabet letter "n" and a lower plate 130 coupled to a lower opening.

Further, the prismatic secondary battery 10 of the present invention includes a cooling unit 300 disposed at at least one side of the case, and a fixing body 400 which fixes the cooling unit 300 to the case.

The cooling unit 300 cools high-temperature gas generated in the battery cells 200 overheated by a thermal runaway phenomenon to an ignition temperature or lower before discharging the high-temperature gas to the outside. The cooling unit 300 operates in an emergency situation in which the high-temperature gas is generated by the thermal runaway phenomenon, and should fully maintain the cooling function in normal conditions.

To this end, the cooling unit 300 includes an absorbent material 310 impregnated with a liquid vaporized by heat generated in the battery cells 200, and a thermally conductive body 320 formed with an insertion hole 322 into which the absorbent material 310 is inserted. The liquid impregnated in the absorbent material 310 absorbs heat corresponding to sensible heat and latent heat due to heat generated in the overheated battery cells 200, in other words, heat of the high-temperature gas, and in this process, the temperature of the high-temperature gas drops.

The thermally conductive body 320, including the built-in absorbent material 310 in the insertion hole 322, is a structure that supports the absorbent material 310, and at the same time, serves to dissipate the heat absorbed by the absorbent material 310 to the surroundings. The time for the liquid in the absorbent material 310 to be vaporized is delayed as the thermally conductive body 320 dissipates heat to the surroundings, and accordingly, a heat absorption action of the liquid is maintained for a long time.

The fixing body 400 serves to fix the cooling unit 300 to the case, and includes a vent hole 410 which guides gas generated in the battery cells 200 and passing through the cooling unit 300 to the outside of the case. Since a front surface and a back surface of the cooling unit 300 fixed to the fixing body 400 (with respect to a flow direction of the high-temperature gas) are not blocked, and a gap is formed between the back surface of the cooling unit 300, which enters the inside of the fixing body 400, and the vent hole 410, the flow of gas is not hindered.

In a first embodiment of the present invention, the absorbent material 310 may be an absorbent material 310 including a super absorbent matrix, for example, a super absorbent polymer (SAP) or a super absorbent fiber (SAF). The super absorbent matrix is porous or fibrous and may absorb a large amount of liquid by expressing a capillary phenomenon, and the super absorbent fiber may be manufactured in a fiber form such as a nonwoven fabric by processing the super absorbent polymer.

In the present invention, specific types of the super absorbent polymer and the super absorbent fiber manufactured from the super absorbent polymer are not specifically limited, and any material having excellent absorption ability for a fluid, specifically, water, may be used without limitation. In the present invention, any one or more selected from the group consisting of polyacrylic acid, polyacrylate, a polyacrylate graft polymer, starch, crosslinked carboxymethylated cellulose, an acrylic acid copolymer, a hydrolyzed starch-acrylonitrile graft copolymer, a starch-acrylic acid graft copolymer, a saponified vinyl acetate-acrylic acid ester copolymer, a hydrolyzed acrylonitrile copolymer, a hydrolyzed acrylamide copolymer, an ethylene-maleic anhydride copolymer, an isobutylene-maleic anhydride copolymer, polyvinylsulfonic acid, polyvinylphosphonic acid, polyvinylphosphoric acid, polyvinylsulfuric acid, sulfonated polystyrene, polyvinylamine, polydialkylaminoalkyl (meth)acrylamide, polyethyleneimine, polyallylamine, polyallylguanidine, polydimethyldiallylammonium hydroxide, a quaternized polystyrene derivative, guanidine-modified polystyrene, quaternized poly(meth)acrylamide, polyvinylguanidine, and a mixture thereof may be an example of the super absorbent polymer, and preferably, at least one selected from the group consisting of a crosslinked polyacrylic acid salt, a crosslinked polyacrylic acid, and a crosslinked acrylic acid copolymer may be an example of the super absorbent polymer, but the present invention is not limited thereto.

In the present invention, the type of acrylic acid copolymer used as the super absorbent polymer is not specifically limited, but preferably, the super absorbent polymer may be a copolymer including an acrylic acid monomer and at least one comonomer selected from the group consisting of maleic acid, itaconic acid, acrylamide, 2-acrylamide-2-methylpropanesulfonic acid, 2-(meth)acryloylethanesulfonic acid, 2-hydroxyethyl(meth)acrylate, and styrenesulfonic acid.

In the present invention, the super absorbent polymer may have a water absorption amount of 10 g/g to 500 g/g, preferably 50 g/g to 200 g/g, but is not limited thereto. That is, 10 g to 500 g of water, preferably 50 g to 200 g, may be absorbed per 1 g of super absorbent polymer.

In the present invention, the duration of a cooling effect may be improved as the water absorption amount of the super absorbent polymer is large, but when the water absorption amount exceeds 500 g/g, fluidity of the super absorbent polymer increases and thus it becomes difficult to maintain its form, making effective cooling impossible, and when the water absorption amount is smaller than 10 g/g, the duration of the cooling effect is too short and thus efficiency may be poor.

Here, the liquid impregnated in the absorbent material 310 may be water. Water is a substance with the greatest sensible heat and latent heat among readily available liquids. Accordingly, the water impregnated in the absorbent material 310 absorbs a large amount of heat during a process of a phase change from liquid to gas, and thus is suitable to be applied to the cooling unit 300 of the present invention.

Further, the cooling unit 300 may include a cover 330 bonded to each of the front and back of the thermally conductive body 320 with respect to a flow direction of the gas which is generated in the battery cells 200 and moves to the vent hole 410 of the fixing body 400. The cover 330 is a membrane member for preventing the liquid impregnated in the absorbent material 310 from being lost due to natural evaporation, and is melted by the heat of the gas introduced into the cooling unit 300 to expose the absorbent material 310 at an appropriate time.

Further, it may be preferable for the electrode lead 210 of the battery cell 200 to protrude in a direction toward one side of the case where the cooling unit 300 is disposed. Since the electrode lead 210 is a component in which current is concentrated and overheating easily occurs, there is an advantage in that the high-temperature gas is immediately cooled and discharged when the electrode lead 210 is disposed to face the cooling unit 300.

The prismatic secondary battery 10 of the present invention may include a side case 120 coupled to one side end portion of the case, that is, a side surface of the main case 110, to cover the fixing body 400, and a busbar 500 provided between the fixing body 400 and the side case 120. The busbar 500 is a component electrically connected to the electrode lead 210, and is partially exposed to the outside through a cut portion of the side case 120.

When the busbar 500 is disposed in the side case 120, the busbar 500 may block the vent hole 410 of the fixing body 400. In this case, a busbar hole 510 that communicates with the vent hole 410 and is open toward the outside of the side case 120 is formed in the busbar 500.

### [Second embodiment]

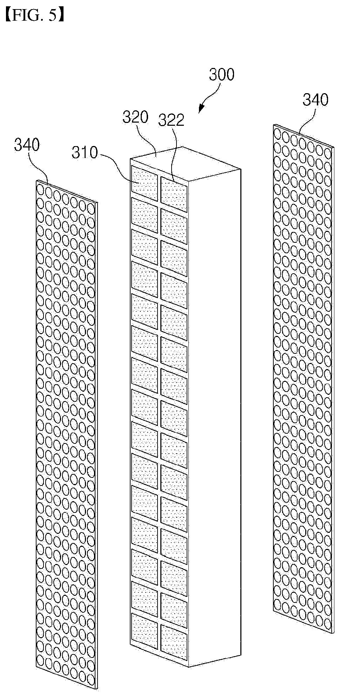

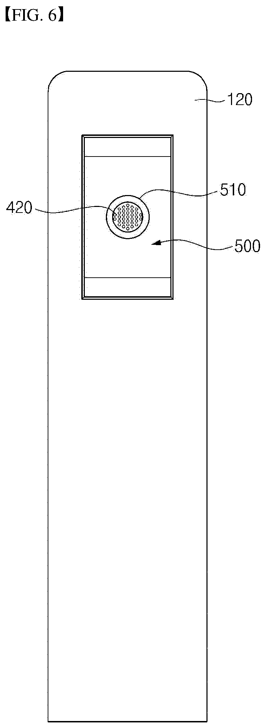

FIG. 5 is a view illustrating a cooling unit 300 according to a second embodiment of the present invention, and FIG. 6 is a view illustrating a state in which an end filter 420 is provided in a vent hole 410 in the second embodiment of the present invention.

In the second embodiment of the present invention, a filter means is installed in the prismatic secondary battery 10, and thus may prevent the discharge of particles included in the high-temperature gas to the outside as they are. Particles exceeding a certain size, which are not sufficiently cooled after passing through the cooling unit 300, may become a high-temperature ignition source to cause an external fire, and the second embodiment of the present invention reduces the risk of fire due to such high-temperature particles. The second embodiment includes any one or more of two filter means.

First, the cooling unit 300 includes a filter 340 which is disposed at at least one of the front and back of a thermally conductive body 320 with respect to a flow direction of the gas, which is generated in battery cells 200 and moves to the vent hole 410, and filters the particles exceeding a certain size included in the gas

The filter 340 is installed at the front and/or the back of the thermally conductive body 320 to filter the particles in the gas flowing into and out of the cooling unit 300. For reference, a membrane member for preventing the loss of a liquid impregnated in the absorbent material 310 may be integrally laminated on the filter 340, and the membrane member may be melted and removed by the heat of the gas like the above-described cover 330.

Next, an end filter 420 which filters the particles exceeding a certain size included in the gas passing through the cooling unit 300 may be provided in the vent hole 410 of the fixing body 400. When the filter 340 is provided in the cooling unit 300, the end filter 420 of the vent hole 410 serves to secondarily filter the particles. In order to optimize a conflicting relationship between a filtering effect and a pressure rise, the filter 340 of the cooling unit 300 and the end filter 420 of the vent hole 410 may be designed to filter particles of different sizes. For example, the filter 340 of the cooling unit 300 having a relatively large area may be configured to filter particles of a relatively smaller size.

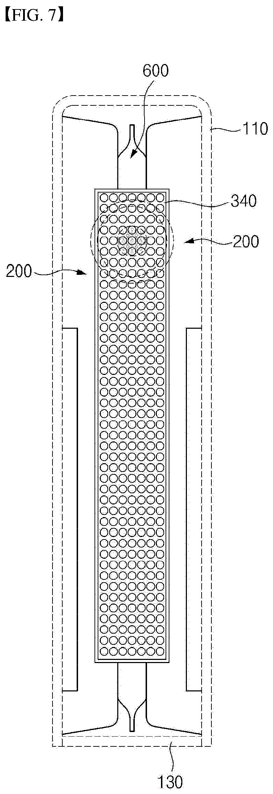

FIG. 7 is a side perspective view illustrating the cooling unit 300 and the vent hole 410 including the end filter 420, and the embodiment in FIG. 7 shows a state in which both the filter 340 of the cooling unit 300 and the end filter 420 of the vent hole 410 are provided. For reference, FIG. 7 illustrates that a heat absorbing pouch 600 is interposed between two pouch-type battery cells 200. The heat absorbing pouch 600 has a built-in absorbent material that is the same as or similar to the absorbent material 310 provided in the cooling unit 300, and directly comes into contact with the battery cell 200 to generate a heat absorption action. The heat absorbing pouch 600 may include a weak portion whose strength (joint strength, tensile strength, or the like) is locally low. The liquid in the absorbent material absorbs heat and is vaporized, and the weak portion is broken by the internal pressure raised by the gas, causing a strong cooling and/or fire extinguishing action by ejecting high-pressure gas.

In addition, for the safety of the prismatic secondary battery 10, when a pressure exceeding a certain value is applied to the end filter 420, the end filter 420 may be broken, or separated from the vent hole 410. When the end filter 420, which has a relatively narrow filtering area, is blocked, the structure of the prismatic secondary battery 10 may collapse as the pressure in the case rises above its limit.

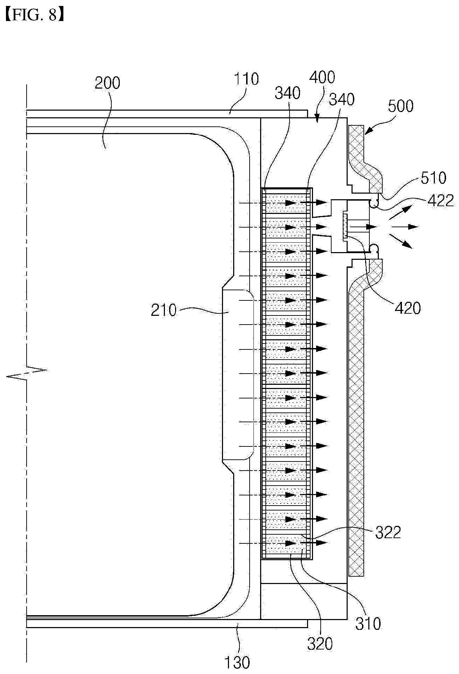

As a safety measure against this situation, the strength or structure of the end filter 420 may be designed so that the end filter 420 itself is broken or the end filter 420 may be separated from the vent hole 410 when excessive pressure is applied. FIG. 8 is a view illustrating the structure in which the end filter 420 may be separated by excessive internal pressure, and the illustrated structure is a structure in which a notch is formed in a protrusion 422, which fixes the end filter 420, so that when a pressure exceeding a certain value is applied, the protrusion 422 is broken, and thus the end filter 420 is discharged to the outside.

In the above, the present invention has been described in more detail with reference to the drawings, examples, and the like.

**[Reference numerals]**

| | | | |
|---|---|---|---|
| 10: | prismatic secondary battery | 100: | case |
| 110: | main case | 120: | side case |
| 130: | lower plate | 200: | battery cell |
| 210: | electrode lead | 300: | cooling unit |
| 310: | absorbent material | 320: | thermally conductive body |
| 322: | insertion hole | 330: | cover |
| 340: | filter | 400: | fixing body |
| 410: | vent hole | 420: | end filter |
| 422: | protrusion | 500: | busbar |
| 510: | busbar hole | 600: | heat absorbing pouch |

## Claims

1. A prismatic secondary battery (10) comprising:
a case made of metal;
at least one battery cell (200) accommodated in the case;
a cooling unit (300) disposed at at least one side of the case;
a fixing body (400) configured to fix the cooling unit (300), and formed with a vent hole (410) configured to guide gas generated in the at least one battery cell (200) and passing through the cooling unit (300) to an outside of the case; and
wherein:
the cooling unit (300) includes an absorbent material (310) impregnated with a liquid vaporized by heat, and a thermally conductive body (320) formed with an insertion hole (322) into which the absorbent material (310) is inserted, and
the cooling unit (300) includes a cover (330) bonded to a front and a back of the thermally conductive body (320) with respect to a flow direction of the gas, the cover (330) is a membrane member for preventing the liquid impregnated in the absorbent material (310) from being lost due to natural evaporation, and
the cover (330) is configured to be melted by the heat of the gas.

2. The prismatic secondary battery (10) of claim 1, wherein the absorbent material (310) is a super absorbent matrix.

3. The prismatic secondary battery (10) of claim 2, wherein the super absorbent matrix includes a super absorbent polymer (SAP) or super absorbent fiber (SAF).

4. The prismatic secondary battery (10) of claim 3, wherein the liquid is water.

5. The prismatic secondary battery of claim 1, wherein the at least one battery cell (200) is a pouch-type battery cell having an electrode lead (210).

6. The prismatic secondary battery (10) of claim 5, wherein the electrode lead (210) protrudes towards the cooling unit (300).

7. The prismatic secondary battery (10) of claim 6, further comprising:
a side case (120) coupled to one side end portion of the case, and configured to cover the fixing body (400); and
a busbar (500) provided between the fixing body (400) and the side case (120) and electrically connected to the electrode lead (210).

8. The prismatic secondary battery (10) of claim 7, wherein a busbar hole (510) configured to communicate with the vent hole (410) and open toward the outside of the side case (120) is formed in the busbar (500).

9. The prismatic secondary battery (10) of claim 1, wherein the cooling unit (300) includes a filter (340) disposed at at least one of a front and a back of the thermally conductive body (320) with respect to a flow direction of the gas and moves to the vent hole (410), and configured to filter particles exceeding a certain size included in the gas.

10. The prismatic secondary battery (10) of claim 9, wherein an end filter (420) configured to filter particles exceeding a certain size included in the gas passing through the cooling unit (300) is provided in the vent hole (410) of the fixing body (400).

11. The prismatic secondary battery (10) of claim 10, wherein the end filter (420) is broken or separated from the vent hole (410) when a pressure exceeding a certain value is applied.

## Patentansprüche

1. Prismatische Sekundärbatterie (10), umfassend:
ein Gehäuse aus Metall;
mindestens eine Batteriezelle (200), die in dem Gehäuse untergebracht ist;
eine Kühleinheit (300), die an mindestens einer Seite des Gehäuses angeordnet ist;
einen Befestigungskörper (400), der konfiguriert ist, um die Kühleinheit (300) zu befestigen, und mit einem Entlüftungsloch (410) ausgebildet ist, das konfiguriert ist, um in der mindestens einen Batteriezelle (200) erzeugtes Gas, das durch die Kühleinheit (300) strömt, zu einer Außenseite des Gehäuses zu leiten; und
wobei:
die Kühleinheit (300) ein absorbierendes Material (310) enthält, das mit einer durch Wärme verdampften Flüssigkeit imprägniert ist, und einen wärmeleitenden Körper (320), der mit einem Einführungsloch (322) ausgebildet ist, in das das absorbierende Material (310) eingeführt wird, und
die Kühleinheit (300) eine Abdeckung (330) enthält, die mit einer Vorderseite und einer Rückseite des wärmeleitenden Körpers (320) in Bezug auf eine Strömungsrichtung des Gases verbunden ist, wobei die Abdeckung (330) ein Membranelement ist, um zu verhindern, dass die in dem absorbierenden Material (310) imprägnierte Flüssigkeit durch natürliche Verdunstung verloren geht, und
die Abdeckung (330) konfiguriert ist, um durch die Wärme des Gases geschmolzen zu werden.

2. Prismatische Sekundärbatterie (10) nach Anspruch 1, wobei das absorbierende Material (310) eine superabsorbierende Matrix ist.

3. Prismatische Sekundärbatterie (10) nach Anspruch 2, wobei die superabsorbierende Matrix ein superabsorbierendes Polymer (SAP) oder eine superabsorbierende Faser (SAF) enthält.

4. Prismatische Sekundärbatterie (10) nach Anspruch 3, wobei die Flüssigkeit Wasser ist.

5. Prismatische Sekundärbatterie nach Anspruch 1, wobei die mindestens eine Batteriezelle (200) eine Batteriezelle vom Pouch-Typ mit einem Elektrodenableiter (210) ist.

6. Prismatische Sekundärbatterie (10) nach Anspruch 5, wobei der Elektrodenableiter (210) in Richtung der Kühleinheit (300) vorsteht.

7. Prismatische Sekundärbatterie (10) nach Anspruch 6, ferner umfassend:
ein Seitengehäuse (120), das mit einem Seitenendabschnitt des Gehäuses gekoppelt und konfiguriert ist, um den Befestigungskörper (400) abzudecken; und
eine Stromschiene (500), die zwischen dem Befestigungskörper (400) und dem Seitengehäuse (120) vorgesehen und elektrisch mit dem Elektrodenableiter (210) verbunden ist.

8. Prismatische Sekundärbatterie (10) nach Anspruch 7, wobei ein Stromschienenloch (510), das konfiguriert ist, um mit dem Entlüftungsloch (410) in Verbindung zu stehen und sich zur Außenseite des Seitengehäuses (120) zu öffnen, in der Stromschiene (500) ausgebildet ist.

9. Prismatische Sekundärbatterie (10) nach Anspruch 1, wobei die Kühleinheit (300) einen Filter (340) enthält, der an mindestens einer von einer Vorderseite und einer Rückseite des wärmeleitenden Körpers (320) in Bezug auf eine Strömungsrichtung des Gases angeordnet ist und sich zum Entlüftungsloch (410) bewegt und konfiguriert ist, um Partikel zu filtern, die eine bestimmte Größe überschreiten und im Gas enthalten sind.

10. Prismatische Sekundärbatterie (10) nach Anspruch 9, wobei ein Endfilter (420), der konfiguriert ist, um Partikel zu filtern, die eine bestimmte Größe überschreiten und im Gas enthalten sind, das durch die Kühleinheit (300) strömt, im Entlüftungsloch (410) des Befestigungskörpers (400) vorgesehen ist.

11. Prismatische Sekundärbatterie (10) nach Anspruch 10, wobei der Endfilter (420) gebrochen oder vom Entlüftungsloch (410) getrennt wird, wenn ein Druck, der einen bestimmten Wert überschreitet, angelegt wird.

## Revendications

1. Batterie secondaire prismatique (10) comprenant :
un boîtier en métal ;
au moins une cellule de batterie (200) logée dans le boîtier ;
une unité de refroidissement (300) disposée sur au moins un côté du boîtier ;
un corps de fixation (400) configuré pour fixer l'unité de refroidissement (300), et formé avec un trou d'évent (410) configuré pour guider le gaz généré dans l'au moins une cellule de batterie (200) et traversant l'unité de refroidissement (300) vers un extérieur du boîtier ; et
dans laquelle :
l'unité de refroidissement (300) inclut un matériau absorbant (310) imprégné d'un liquide vaporisé par la chaleur, et un corps thermoconducteur (320) formé avec un trou d'insertion (322) dans lequel le matériau absorbant (310) est inséré, et
l'unité de refroidissement (300) inclut un couvercle (330) fixé à un avant et un arrière du corps thermoconducteur (320) par rapport à une direction d'écoulement du gaz, le couvercle (330) est un élément membranaire pour empêcher que le liquide imprégné dans le matériau absorbant (310) ne soit perdu par évaporation naturelle, et
le couvercle (330) est configuré pour fondre sous l'effet de la chaleur du gaz.

2. Batterie secondaire prismatique (10) selon la revendication 1, dans laquelle le matériau absorbant (310) est une matrice super-absorbante.

3. Batterie secondaire prismatique (10) selon la revendication 2, dans laquelle la matrice super-absorbante inclut un polymère super-absorbant (SAP) ou une fibre super-absorbante (SAF).

4. Batterie secondaire prismatique (10) selon la revendication 3, dans laquelle le liquide est de l'eau.

5. Batterie secondaire prismatique selon la revendication 1, dans laquelle l'au moins une cellule de batterie (200) est une cellule de batterie de type sachet ayant une borne d'électrode (210).

6. Batterie secondaire prismatique (10) selon la revendication 5, dans laquelle la borne d'électrode (210) fait saillie vers l'unité de refroidissement (300).

7. Batterie secondaire prismatique (10) selon la revendication 6, comprenant en outre :
un boîtier latéral (120) couplé à une partie d'extrémité latérale du boîtier, et configuré pour couvrir le corps de fixation (400) ; et
une barre omnibus (500) prévue entre le corps de fixation (400) et le boîtier latéral (120) et connectée électriquement à la borne d'électrode (210).

8. Batterie secondaire prismatique (10) selon la revendication 7, dans laquelle un trou de barre omnibus (510) configuré pour communiquer avec le trou d'évent (410) et s'ouvrir vers l'extérieur du boîtier latéral (120) est formé dans la barre omnibus (500).

9. Batterie secondaire prismatique (10) selon la revendication 1, dans laquelle l'unité de refroidissement (300) inclut un filtre (340) disposé sur au moins l'un d'un avant et d'un arrière du corps thermoconducteur (320) par rapport à une direction d'écoulement du gaz et se déplace vers le trou d'évent (410), et configuré pour filtrer les particules dépassant une certaine taille incluses dans le gaz.

10. Batterie secondaire prismatique (10) selon la revendication 9, dans laquelle un filtre d'extrémité (420) configuré pour filtrer les particules dépassant une certaine taille incluses dans le gaz traversant l'unité de refroidissement (300) est prévu dans le trou d'évent (410) du corps de fixation (400).

11. Batterie secondaire prismatique (10) selon la revendication 10, dans laquelle le filtre d'extrémité (420) est cassé ou séparé du trou d'évent (410) lorsqu'une pression dépassant une certaine valeur est appliquée.
